# EUROPEAN PATENT APPLICATION

(11) **EP 1 262 566 A2**
(43) Date of publication of application: **04.12.2002**
(21) Application number: 02253745.0
(22) Date of filing: 29.05.2002
(51) Int. Cl.: C12Q 1/68, B01J 19/00

(54) **Composite polynucleotide arrays**

(30) Priority: 30.05.2001 US 870939
(71) Applicant: Agilent Technologies, Inc., Palo Alto, CA 94306 (US)
(72) Inventor: Amorese, Douglas A., Los Altos, CA 94022 (US); Shannon, Karen W., Los Gatos, CA 95035 (US); Collins, Patrick J., San Francisco, CA 94100 (US); Wolber, Paul K., Los Altos, CA 94022 (US)
(74) Representative: Tollett, Ian

(57) **Abstract**

A polynucleotide array, and methods of making and using such arrays. The array (12) may include a first set of multiple features (16a) each of which has first polynucleotide molecules of at least 400 nucleotides in length, and a second set of features (16b) each of which has second polynucleotide molecules of no more than 100 nucleotides in length. The second set of features (16b) can be used as control features, or to replace failed sequences in an enzymatic amplification to produce first polynucleotides, or to detect polymorphisms or splice variants which may not be detected by a particular first polynucleotide.

## Description

This invention relates to a polynucleotide array, and to methods for fabricating such an array. In particular it relates to biopolymer arrays (such as polynucleotide arrays) which are useful in diagnostic, screening, gene expression analysis, and other applications.

Arrays of biopolymers, such as arrays of peptides or polynucleotides (such as DNA or RNA), are known and are used, for example, as diagnostic or screening tools. Such arrays include regions (sometimes referenced as features or spots) of usually different sequence biopolymers arranged in a predetermined configuration on a substrate (the substrate linked biopolymers sometimes being referenced as "probes"). The arrays, when exposed to a sample, will exhibit a pattern of binding which is indicative of the presence and/or concentration of one or more components of the sample, such as an antigen in the case of a peptide array or a polynucleotide of particular sequence in the case of a polynucleotide array. The binding pattern can be detected during reading, for example, by observing a fluorescence pattern on the array following exposure to a fluid sample in which all potential targets (for example, DNA) in the sample have been labeled with a suitable fluorescent label.

Biopolymer arrays can be fabricated by depositing previously obtained biopolymers (such as from synthesis or natural sources) onto a substrate, or by *in situ* synthesis methods. The "deposition method" basically involves depositing previously obtained biopolymers at predetermined locations on a substrate which are suitably activated such that the biopolymers can link thereto. The deposited biopolymers may, for example, be obtained from synthetic sources (that is, from linking smaller units such as monomers) or from physiological sources (such as from massive parallel amplification, using one or more enzymes, of different polynucleotide sequences from a suitable library to generate, for example cDNA probes). Biopolymers of different sequence may be deposited at different regions of the substrate to yield the completed array. Washing or other additional steps may also be used. Examples of the deposition method include loading then touching a pin or capillary to a surface, such as described in US 5,807,522 or deposition by firing from a pulse jet such as an inkjet head, in a manner and using apparatus such as described in US 6,180,351, US 6,232,072, PCT publications WO 95/25116 and WO 98/41531, and elsewhere. Still other deposition methods of fabricating an array include pipetting and the use of positive displacement pumps such as the Biodot equipment (available from Bio-Dot Inc., Irvine CA, USA). The biopolymers obtained from physiological sources tend to be much longer in length than those obtained by synthetic methods.

For *in situ* fabrication methods, multiple different reagent droplets are deposited by pulse jet or other means at a given target location in order to form the final feature (hence a probe of the feature is synthesized on the array substrate). The *in situ* fabrication methods include those described in US 5,449,754 for synthesizing peptide arrays, and in US 6,180,351 and WO 98/41531 and the references cited therein for polynucleotides, and may also use pulse jets and apparatus such as described in 6,180,351 and US 6,232,072 for depositing reagents. An additional method of fabricating an array involves a photolithographic process using many masks, such as described in US 5,405,783 and elsewhere.

In array fabrication, the quantities of polynucleotides (or other material) available for the array are usually very small and expensive. Sample quantities available for testing are usually also very small and it is therefore desirable to simultaneously test the same sample against a large number of different probes on an array. These conditions require use of arrays with large numbers of very small, closely spaced features. For example, an array may have more than 100, 1000, or even more than 10,000 features on an area of about 20 or 10 cm², a large proportion of which have different composition from any other features. When the array is exposed to a sample then read, some features may provide very low signals ("weak features") while others may produce very strong signals ("strong features") depending on the concentration and binding strengths of the target polynucleotides with their respective features.

It is important to confirm that the array was properly exposed to the sample under conditions which would allow any targets to sufficiently bind to their respective array features. On a polynucleotide array this can be done by exposing the array to both the sample and added control polynucleotides of a sequence which will bind to respective control features under the hybridization conditions. Further, the location of all features in an image map (sometimes references simply as an "image") of the read signals should be accurately determined so that signals from any region on the read array can be correctly assigned to its corresponding feature. One way of accomplishing this is to identify the control features in an image map of the read array and use their positions used as a reference to determine the positions of the remaining features (including weak features). It is also important that all features actually be present, that they contain the expected compositions, and are effective to detect and distinguish the desired targets. If any of the foregoing conditions are not met within a reasonable tolerance, the results obtained from a given array may be unreliable and misleading. This of course can have serious consequences to diagnostic, screening, gene expression analysis or other purposes for which the array is being used.

The present invention realizes some important distinctions between arrays with biopolymer probes obtained from physiological sources and those made synthetically. In particular, arrays made with shorter length biopolymer probes (such as from synthetic sources) are generally considered to have higher specificity due to the shorter length of the probes and can be designed to reflect only a portion of the target molecule (believed to be of interest) with minimal cross reactivity to related sequences. On the other hand, arrays made with longer length biopolymer probes (such as from physiological sources) are generally considered more sensitive because the longer length biopolymers are able to form a more stable hybrid to the target molecule. However, the shorter length probes may miss interesting observations because of the lack of sensitivity or because they have been designed to the wrong region of a sample target (for example, a portion not present within a specific splice variant or one containing a polymorphism that impacts hybridization). On the other hand, longer length probes may miss interesting observations because of their lack of specificity (for example, a failure to detect expression differences within one member of a family if other members are present and unchanged or cross reactive with a different gene entirely).

The present invention further realizes that an additional complication with the use of longer length probes (such as cDNA probes) on an array, arises from the relatively lower density of molecules that can be attached to the surface versus shorter length biopolymers. This can have a negative impact as to the type of control targets that can be used with these probes. Among other things, these pre-labeled control targets are intended to confirm that efficient hybridization has taken place. If one chooses a longer length control target, such as enzymatically-generated targets (for example cDNA targets), there are issues of manufacturability, cost and physical stability. If one chooses a shorter length control target (such as synthetic polynucleotide targets) there is limited sensitivity (due to the 1/1 relationship between probe and target and the limited probe density on the surface).

Additionally, the present invention realizes that where massive parallel amplification of sequences is used to produce many different polynucleotide sequences for fabricating an array by a deposition method, one or more amplifications may fail for various reasons (e.g. contamination, incorrect conditions, and the like). This could result in a particular biopolymer sequence destined for a corresponding array feature, not being produced or not being produced in an adequate yield. Consequently, without correction of this situation, the corresponding array feature may yield an incorrect result when exposed to a sample.

In consideration of these problems, the present invention then provides in one aspect an array of biopolymers (for example, polynucleotides such as DNA). Such an array may have a first set of multiple features each of which has first polynucleotide molecules of at least 400 nucleotides in length (for example, at least 500, 1000, or 1500 nucleotides in length). The array also may have a second set of features each of which has second polynucleotide molecules of no more than 100 nucleotides in length (for example, no more than 80, 70, or 60 nucleotides in length). The invention also provides a kit which includes an array of the foregoing type, as well as polynucleotide controls (typically, but not necessarily, labeled). The controls, or their complements, may be at least 70% (or at least 80%, 90%, or 100%) complementary to sequences of respective second polynucleotides. The controls or their complements, may also be selected such that they will hybridize to respective second polynucleotides under a first set of hybridizing conditions (defined below). The kit may also include instructions to expose the array to a sample and the controls of the kit or their complements. There is further provided a method of fabricating an array of the foregoing type by forming the first and second sets of features on a substrate (for example, including depositing drops containing the first and second polynucleotides onto the substrate). The method may further optionally include enzymatically processing polynucleotides to obtain the first polynucleotide molecules, and synthesizing the second polynucleotide molecules. In this case, the method can additionally include evaluating a yield of the enzymatic processing for a failed product sequence which has a yield below a predetermined threshold, and synthesizing at least one second polynucleotide of at least 25 nucleotides in length having a sequence the same as a sequence within the failed sequence.

The array features may be arranged in a rectangle with second set features at least at the corners of the rectangle.

The array features may be arranged in lines with at least some lines having at least two second set features which are spaced apart by at least 70% of the first set features in the same line.

In one embodiment at least 70 % of a second polynucleotide sequence (preferably the majority of second polynucleotide sequences) is not contained within a first polynucleotide sequence.

In another aspect of the invention there is provided a kit comprising:
(a) a polynucleotide array having:
   a first set of multiple features each of which has first polynucleotide molecules of at least 400 nucleotides in length;
   a second set of features each of which has second polynucleotide molecules of no more than 100 nucleotides in length; and
(b) polynucleotide controls which are, or their complements are, at least 70% complementary to sequences of respective second polynucleotides.

The present invention further provides a method of using a polynucleotide array of the present invention. This method may include exposing the array to control targets such that the control targets hybridize at least 100 times more efficiently to respective second features than they do to any of the first features. By "more efficiently" in this content is meant that more control target will bind to a control feature per unit area, than to any of the first features per same unit area. Thus 100 times more efficiently indicates that 100 times more control target will hybridize under the conditions used to a control feature than to any same area of any of the first features. Second set features may also hybridize more completely with control targets than most, or any, of the first set features hybridize to any control or sample targets when the array is also exposed to a sample simultaneously with the control targets. That is, each of multiple second set features hybridize to more control target, per unit area of the second set feature, than any most, or all, first set features hybridize to any sample target, per unit area of the first features. The array and control polynucleotides may be from a kit of the present invention.

There is further provided by the present invention, a method which includes reading the array to obtain an image representing the amount of polynucleotides which have bound to first and second set features. Locations of first features in the image may be evaluated (including determined) using the locations of second features in the image.

The present invention further provides a method of fabricating a polynucleotide array which includes enzymatically processing one or more polynucleotides to obtain a set of polynucleotide molecules in respective fluid samples. Solid particles which may be present may then be removed (such as by filtering or centrifuging the fluid samples), and drops of the fluids then ejected onto a substrate through an orifice of a pulse jet, such as that described in the present application (and which orifice may, for example, have an area of less than 1 mm², or even less than 0.1 mm² or 0.01 mm²).

The steps of forming of the first and second sets of features may comprise depositing drops containing the first and second polynucleotides onto the substrate.

A sequence of a second polynucleotide is preferably contained within a first polynucleotide.

Arrays and methods of the present invention can also be fabricated or used, in which polymers other than biopolymers (including polynucleotides) are present as probes on the array, or as controls or sample targets. Consequently, the present invention contemplates that "polynucleotide", or similar terms in any description herein, can be replaced with "biopolymer", and either of the foregoing terms could be replaced with "polymer". Additionall, while the description herein related to the ratios of longer versus shorter chain polynucleotides (or biopolymers) may have the longer chain polynucleotides present in the greater amount, any of the ratios can be inverted (that is, the shorter polynucleotide is in the greater amount, for example a ratio of 10/1 of second set features to first set features) for particular applications.

One or more of the various aspects of the present invention may provide one or more, or other, useful benefits as may be mentioned below. For example, the presence of second features having shorter polynucleotides than the first features may facilitate use of the second features as control features, since there are then a greater number of second polynucleotides present on the second features than would be the case if longer polynucleotides were used at the second features. Also, the second features may be used in place of failed sequences, as described below, or to detect splice variants or polymorphisms.

A number of preferred embodiment of the invention will now be described with reference to the drawings in which:
FIG. 1 illustrated a substrate carrying multiple arrays, such as may be fabricated by methods of the present invention;
FIG. 2 is an enlarged view of a portion of FIG. 1 showing multiple ideal spots or features;
FIG. 3 is an enlarged illustration of a portion of the substrate in FIG. 2;
FIG. 4 illustrates a kit of the present invention; and
FIGS. 5 and 6 is each a composite image from a read array of the present invention after having been exposed to a control target and a sample.

To facilitate understanding, identical reference numerals have been used, where practical, to designate identical elements that are common to the figures.

In the present application, unless a contrary intention appears, the following terms refer to the indicated characteristics. A "biopolymer" is a polymer of one or more types of repeating unts. Biopolymers are typically found in biological systems and particularly including polysaccharides (such as carbohydrates), and peptides (which term is used herein to include polypeptides and proteins) and their analogs, as well as polynucleotides and their analogs such those composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides.. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides.

An "array", unless a contrary intention appears, includes any one or two dimensional arrangement of addressable regions, typically arranged in a regular pattern (for example, straight or curved lines), bearing a particular chemical moiety or moieties (for example, biopolymers such as polynucleotide sequences) associated with that region. An array is "addressable" in that it has multiple regions of different moieties (for example, different polynucleotide sequences) such that a region (sometimes referenced as a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes (sometimes referenced as "target probes") which are bound to the substrate at the various regions. However, either of the "target" or "target probes" may be the one which is to be evaluated by the other (thus, either one could be an unknown mixture of polynucleotides to be evaluated by binding with the other). An "array layout" refers collectively to one or more characteristics of the features, such as feature positioning, one or more feature dimensions, errors, or some indication of a moiety at a given location (for example, a biopolymer sequence). "Hybridizing" and "binding", with respect to polynucleotides, are used interchangeably. A "complement" to a given polynucleotide sequence is a sequence which will form a double stranded nucleic acid structure by exactly matching base pairs. The complement may have additional nucleotides beyond the sequence which exactly matches the given polynucleotide. When one sequence is referenced as being a specified percentage "complementary" to another sequence, this means that the two sequences can be aligned such that at least the specified percentage of base pairs in each sequence match.

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item (such as by shipping) and includes, at least in the case of data, physically transporting a medium carrying the data or communicating the data. An array "package" may be the array plus a substrate on which the array is deposited, although the package may include other features (such as a housing with a chamber). A "chamber" references an enclosed volume (although a chamber may be accessible through one or more ports). A "pulse jet" is a device which can dispense drops in the formation of an array. Pulse jets operate by delivering a pulse of pressure (such as by a piezoelectric or thermoelectric element) to liquid adjacent an outlet or orifice such that a drop will be dispensed therefrom. A "label" is any species (atomic, molecular or otherwise) which facilitates detection and identification of features bound to a target versus those that are not. Labels may include fluorescent dyes (for example, cyanine dyes), chemiluminescent or electroluminescent moieties, as well as components which provide an electrical signal, any of which may be linked to the target (sample or control). It will also be appreciated that throughout the present application, that words such as "top", "upper", and "lower" are used in a relative sense only. "Fluid" is used herein to reference a liquid. A "set" or a "sub-set" with reference to features or items, has one or multiple features as members. The use of "may" implies optionally. Reference to a singular item, includes the possibility that there are plural of the same items present. Steps recited in any method herein, may be carried out in the recited order or in any other order that is logically possible. All patents and other cited references are incorporated into this application by reference. However, for the purposes of the present application, the definitions provided herein will prevail over any contrary definition of a cited reference.

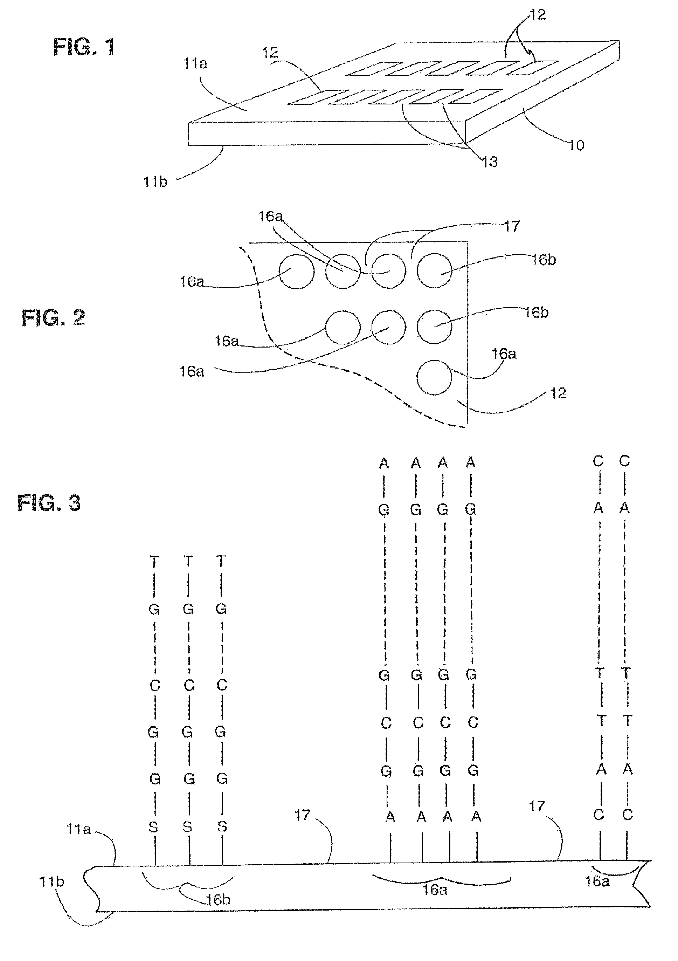

Referring first to FIGS. 1-3, typically methods of the present invention produce or use a contiguous planar substrate 10 carrying one or more arrays 12 disposed across a front surface 11a of substrate 10 and separated by inter-array areas 13. A back side 11b of substrate 10 does not carry any arrays 12. Each array 12 is rectangular (and may or may not be square), although other array shapes (for example, circular, elliptical, annular) could be present instead. The arrays on substrate 10 can be designed for exposure to any type of sample whether a sample to be analyzed for a mixture of polynucleotides or a known mixture of polynucleotides (in which latter case the arrays may be composed of features carrying unknown sequences to be evaluated). While ten arrays 12 are shown in FIG. 1 and the different embodiments described below may use a substrate with only one array 12 on it, it will be understood that substrate 10 and the embodiments to be used with it may have any desired number of arrays 12. The substrate 10 in FIG. 1 may be cut following fabrication of arrays 12 to produce a substrate 10 portion carrying only one or another number of arrays 12. Also, substrate 10 may be of any shape, and any apparatus used with it adapted accordingly. Depending upon intended use, any or all of arrays 12 may be the same or different from one another and each will contain multiple spots or features 16 of biopolymers such as polynucleotides. Features 16 in each array 12 are arranged in straight lines as straight rows and columns, although other arrangements could be used (for example, curved lines). A typical array may contain from more than ten, more than one hundred, more than one thousand or ten thousand features, or even more than one hundred thousand features. All of the features 16 may be different, or some or all could be the same. For example, some features may be present two or more times spaced apart by intervening features, as a means of checking on hybridization conditions during array use.

In the embodiment illustrated, there are interfeature areas 17 between features of an array 12, which do not carry any polynucleotide. It will be appreciated though, that the interfeature areas 17 of an array 12, when present, could be of various sizes and configurations. It will also be appreciated that there need not be any space separating arrays 12 from one another or features 16 within an array from one another. However, in the case where arrays 12 are formed by the deposition method as described above, such inter-array and inter-feature areas 17 will typically be present (although they need not be). Inter-feature areas 17 may not be present, for example, when the arrays 12 are fabricated by means of a photolithographic process. Each feature 16 carries a predetermined polynucleotide (which includes the possibility of mixtures of polynucleotides). As per usual, A, C, G, T represent the usual nucleotides, while S represents a stilt as described below. It will be understood that there may be a linker molecule (not shown) of any known types between the front surface 11a and the first nucleotide or stilt S. Features 16 may have widths (that is, diameter, for a round spot) in the range from a minimum of about 10 µm to a maximum of about 1.0 cm, for example in the range about 1.0 µm to 1.0 mm, usually about 5.0 µm to 500 µm, and more usually about 10 µm to 200 µm. Features that are not round may have an equivalent area.

FIGS. 2 and 3 are enlarged views illustrating portions of ideal features where the actual features formed are the same as the desired features (sometimes referenced as the "target" or "aim" features), with each feature 16 being uniform in shape, size and composition, and the features being regularly spaced. In practice, such an ideal result is difficult to obtain. It will be seen from FIG. 3 that array 12 is composed primarily of a first set of features 16 (sometimes referenced as "first features"), with a features 16b of a second set (sometimes referenced as "second features") positioned at each comer of each array 12, and in particular with a second feature 16b at each end of each of the first two lines of feature 16. In this configuration then, several lines of features 16 each have two second features spaced apart by 100% of the first features 16a of the same line. However, one or more of a pair of second features 16b in one or more lines could be positioned inwards from the ends of the corresponding line, such that two of the second features are spaced apart by at least 80%, 70%, or 50% of the first features in the same line. However, second features 16b need not be so positioned within an array 12. Each first feature 16a has first polynucleotide molecules of at least 400 nucleotides (or at least 500, 1000, or 1500 nucleotides) in length, while each of the second features 16b has second polynucleotide molecules of no more than 100 nucleotides (or no more than 80, 70, or 60 nucleotides) in length. While the specified length polynucleotides will represent the majority (and perhaps at least 80%, 90%, or all or substantially all) of the polynucleotides present at a feature 16, the polynucleotides of the required length at a feature may (but need not necessarily have) the same sequence. For example, first polynucleotide molecules on a particular first feature 16a could be composed of one sequence or multiple different sequences (for example, two or three different sequences). The ratio of first features 16a to second features 16b may be at least 10/1, or at least 20/1 (or even at least 100/1), and either one of the first or second polynucleotides of a feature 16 may be single stranded or double stranded.

Second features 16b may include stilt portions S as shown in FIG. 3. A "stilt" is a polymer such as a polynucleotide, which is designed to not hybridize to any control target or any polynucleotide in the sample under the first hybridization conditions. "First hybridization conditions" are defined herein to mean a hybridization solution as defined in Table 4 and at 65°C water bath for approximately 17 hours. However for the "first hybridization conditions" the components in Table 4 are, or may be modified, as follows: the labeled cDNA is the particular solution of sample polynucleotides to which the array is to be exposed; the labeled HCV0188 oligonucleotide may be replaced with the particular second polynucleotide (or total second polynucleotides if more than one) to be used; the amount of sample material may be 10ug total RNA per color (Cy3 cDNA plus Cy5 cDNA). Note that Cot 1 DNA is a competitor that is used to suppress cross-hybridization while Li-Mes is a MES (morpholinoethanesulfonic acid) buffer with a Li counter ion. By "not hybridize" in this situation means less than 0.1% (and may even be less than 0.01%) of the second polynucleotide of a second feature 16b will hybridize with control polynucleotide (which may be from the same kit as the array) or any sample polynucleotide present during use of the array. A "polynucleotide stilt portion" as used in this application is the first polynucleotide sequence linked to a substrate, which is of at least 10 nucleotides and is homopolymeric or contains only three of the four possible nucleotides. The lengths specified for the second polynucleotides may exclude the lengths of any polynucleotide stilt portions.

First polynucleotides of the first features 16a may be purchased from commercial sources (for example, from Incyte Pharmaceuticals, Inc., Palo Alto, CA) or may be obtained by enzymatic processing of one or more polynucleotides. For example, by parallel enzymatic amplifications of multiple different sequence polynucleotides from a library derived from a physiological source. Such physiological sources may include a variety of eukaryotic or prokaryotic sources, with physiological sources of interest including sources derived from single-celled organisms such as yeast and multicellular organisms, including plants and animals, particularly mammals, where the physiological sources from multicellular organisms may be derived from particular organs or tissues of the multicellular organism, or from isolated cells derived therefrom. Methods of constructing libraries are known and described, for example, by Maniatis et al. (1989), Molecular Cloning: A Laboratory Manual 2d Ed. (Cold Spring Harbor Press). A number of different enzymatic protocols exist for the enzymatic amplification and continue to be developed. Such protocols typically employ the use of at least one oligonucleotide primer. The sequence of the primer employed may vary depending on which method is employed for enzymatic amplification. Enzymatic polynucleotide amplification methods include the "polymerase chain reaction" (PCR) as described in U.S. Pat. No. 4,683,195 and a number of transcription-based exponential amplification methods, such as those described in U.S. Pat. Nos. 5,130,238; 5,399,491; and 5,437, 990. Each of these methods uses primer-dependent nucleic acid synthesis to generate a DNA product, which serves as a template for subsequent rounds of primer-dependent nucleic acid synthesis (DNA) or primer independent nucleic acid synthesis (RNA). Each process uses (at least) two primer sequences complementary to different strands of a desired nucleic acid sequence and results in an exponential increase in the number of copies of the target sequence. Alternatively, amplification methods that utilize a single primer may be employed. See, for example, US 5,554,516; and 5,716,785. cDNA produced by enzymatic methods and used for second polynucleotides, will often be double stranded.

A resulting DNA from each amplification may be used as the first polynucleotide for a corresponding first feature 16a following purification. However, it is possible that an amplification to produce any particular first sequence did not produce that first sequence or produced it with a yield below a predetermined threshold (any such not produced or low yield sequence being referenced as a "failed sequence"). Thus, a yield of one or more of the enzymatic amplifications may be evaluated for a failed product sequence. This evaluation can be performed by known methods, for example by gel electrophoreses or by the use of methods as disclosed in US 6,235,471 and US 6,235,171 and the references cited therein. When it is determined that there is one or more failed sequences, at least one second polynucleotide having a sequence the same as a sequence within each failed sequence may be synthesized from monomers using any suitable method such as those mentioned below. Such a synthesized second sequence may be of at least 15, 25, 40 or 50 nucleotides in length. The synthesized second sequence may then be used in a first case, as a second sequence for a corresponding second feature. At least 70% (or 80%, 90% or all) of a second sequence (or all second sequences) in this case, may not be contained within a first polynucleotide (or any first polynucleotide), and in effect is used to replace or "fill in" for the failed sequence or a portion of it. Several such synthesized second sequences may be used on one or respective different array features to replace or fill in for each failed sequence. Thus, second features 16b need not necessarily be control features.

When first polynucleotides are produced by enzymatic methods such as those described above, the resulting solutions containing them may each be treated by filtration or centrifugation to remove any particulates. This may particularly be useful when the resulting polynucleotide containing fluid is to be deposited as drops through an orifice, using any of the drop deposition devices disclosed herein. One particular procedure for a combined product from 3-6 PCR amplification reactions (∼60 µl volumes in 96-well conical plates) is essentially as follows:
(i) Centrifuge plate for 15 minutes at 3,500 rpm; and
(ii) Remove 5 µl of material from the bottom of each well using a Hydra robot and discard.

In a second case, one or more second features 16b may also have second polynucleotides of a sequence which is contained within a first polynucleotide sequence. Such second polynucleotides may be completely complementary to different sequence splice variants of an mRNA. Splice variants are described, for example, by D. D. Shomaker, et al Nature, volume 409,feb 15,2001, page 922. Alternatively, such second polynucleotides may be completely complementary to respective polymorphisms of a target polynucleotide.

In a third case, when it is desired to use a second feature 16b as a control feature, the sequence of the corresponding second polynucleotide molecules may be selected such that at least 70% (or 80%, 90% or all) is not contained within any of the first polynucleotides (in order to avoid hybridization with sample polynucleotides). Thus, when a subset of the second features are to be used as such control features, then this subset of the second polynucleotide sequences would meet this requirement.

It is of course possible to construct array 12 with mixtures of second features for different cases (for example, an array 12 may include second features to detect splice variants as well as second features which act as control features).

Thus, an array 12 may have one or more or all second features 16b, which have a sequence which is or is not, contained within one or any of the polynucleotides of the first features 16a. In evaluating whether second polynucleotide sequences meet either condition, polynucleotide stilt portions may generally be disregarded. Also, it is possible that none of the second polynucleotide sequences is contained within any of the first polynucleotide sequence (for example, wherein all second features are used as control features or are used to fill in or replace failed sequences, or a combination of the foregoing).

In any event, the second polynucleotides can be synthesized from corresponding monomers, such as nucleosides, using known techniques. Polynucleotide synthesis techniques and chemistry are described in detail, for example, by Caruthers, Science 230: 281-285, 1985; Itakura et al., Ann. Rev. Biochem. 53: 323-356; Hunkapillar et al., Nature 310: 105-110, 1984; and in "Synthesis of Oligonucleotide Derivatives in Design and Targeted Reaction of Oligonucleotide Derivatives", CRC Press, Boca Raton, Fla., pages 100 et seq., as well as in US 4,458,066, US 4,500,707, US 5,153,319, US 5,869,643, EP 0294196, and elsewhere The phosphoramidite and phosphite triester approaches are most broadly used, but other approaches include the phosphodiester approach, the phosphotriester approach and the H-phosphonate approach. For polynucleotides used as control targets, these may be labeled with a fluorescent cyanine dye by incorporating a labeled nucleoside (which are commercially available) during the synthesis. This can be done during synthesis of a control polynucleotide for a kit as described herein, or by an end user during an enzymatic synthesis of a complement of the control polynucleotides in the kit when such a complement is used as the control target to actually bind with second polynucleotides.

Each array 12 may be fabricated by a drop deposition method. For example, all of the first and second polynucleotides may be deposited as solutions in a fluid, onto substrate 10 using a suitable drop deposition device, such as a pulse jet or other device where the fluid is deposited as drops from an orifice. Particular apparatus and methods are described in detail in: US 6,180,351; US 6,232,072; and the following U.S. patent applications: Serial No. 09/183,604 for "Method And Apparatus For Liquid Transfer" filed Oct. 30, 1998 by Tella et al, and U.S. Patent Application Serial No. 09/150,507 filed Sept. 9, 1998 by Caren et al. for "Method And Multiple Reservoir Apparatus For Fabrication Of Biomolecular Arrays". As previously mentioned, all of the foregoing are incorporated herein by reference. Note in the foregoing an orifice of the drop deposition device may have a diameter (in the shape of a circular orifice) or longest dimension (where the orifice is not circular) of 1 µm to 1 mm, usually about 5 µm to 100 µm, and more usually about 10 µm to 60 µm. Other drop deposition devices may also be used with such sized orifices. Orifice shapes with areas equivalent to the foregoing ranges may also be used.

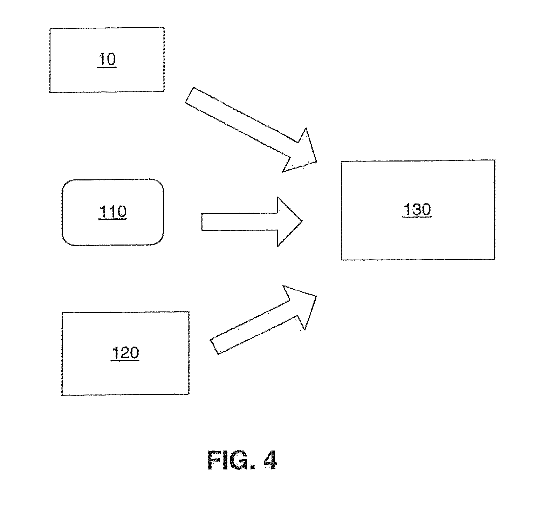

As shown in FIG. 4, a substrate 10 carrying one or more arrays 12 may be provided together in a kit along with control polynucleotides (in separate containers within a package 110) which are exactly complementary to respective second polynucleotides of control features 16b. The control polynucleotides are sometimes referenced simply as "controls". Additionally, instructions 120 may be included in the kit in the form of written human readable instructions or machine readable instructions carried on a suitable medium (such as paper for human readable instructions, or a suitable memory for computer readable instructions) to expose the array simultaneously to any included controls , or their complements, and a sample. The instructions may optionally provide details on any of the procedures or conditions (for example, hybridization conditions) under which the exposure is to take place, as well as on preparing complements to the controls or labeling the controls or their complements. All the elements of the kit may be included together in a common package or container 130, and the kit forwarded to a local or remote customer for use.

An array 12 may be used by exposing it to a sample using first hybridization conditions as described below, or other suitable hybridization conditions which can be determined through a set of routine experiments for any particular array, sample, and control targets (if any). The resulting sample exposed array may then be read by suitable means. For example, fluorescent labels may be detected by scanning a laser beam across the array and detecting the resulting fluorescent signals from each feature. A suitable apparatus for such scanning is the GENEARRAY scanner available from Agilent Technologies, Inc., Palo Alto, CA. Other suitable apparatus and methods are described in U.S. patent applications: Serial No. 09/846125 "Reading Multi-Featured Arrays" by Dorsel et al.; and Serial No. 09/430214 "Interrogating Multi-Featured Arrays" by Dorsel et al. As previously mentioned, these references are incorporated herein by reference. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US 6,221,583 and elsewhere). The presence of a bar code or other identification associated with an array, can be used before, during, or after reading, as disclosed in any of the references cited herein. Results from reading a sample array can be processed or not, and communicated or forwarded as described in the references cited herein.

Particular examples of the present invention will now be described. An array was fabricated by drop deposition with 16,000 cDNA first features and 90 oligonucleotide second features (used as control features). The same second polynucleotide was used for all of the control features, namely single stranded HCV0188. HCV0188 is a 60-mer with the following sequence (SEQ. ID 1): The resulting array was simultaneously exposed to fluid containing both a fluorescent cyanine dye labeled control target exactly complementary to SEQ. ID 1, and a sample containing polynucleotides (specifically, mRNA obtained from cells was enzymatically converted to labeled cDNA by the incorporation of a Cyanine dCTP analogue using MMLV Reverse Transcriptase). The exposure was performed under "first hybridization conditions" which are as follows:

### Required Reagents

Cy3-labeled cDNA
Cy5-labeled cDNA (See Standard Operating Procedure "Preparation of Cy3- and Cy5-labeled cDNA Targets for Gene Expression Monitoring using Life Technologies Kit (Agilent P/N G2555-66002), version A04")
10x Deposition Control Targets
10x Competitor, P/N
2x Deposition Hybridization Buffer
Nuclease-free water
20x SSC, available from Amresco P/N 0804
10% SDS, available from Life Technologies P/N 15553027
MilliQ water

### Procedure

### Preparation of Reagents:

10x Deposition Control Targets
Add 60 µl of DNase/RNase-free distilled water to lyophilized pellet. Mix by gently vortexing. Store resuspended 10x Deposition Control Targets frozen at -20°C.
10x Competitor
Add 60 µl of DNase/RNase-free distilled water to lyophilized pellet. Mix by gently vortexing. Store resuspended 10x Competitors frozen at -20°C.
0.5x SSC, 0.01% SDS
Add the following components in the order indicated to a nuclease-free graduated cylinder:

**Table 1:**

| ***0.5x SSC, 0.01% SDS*** | |
|---|---|
| Component | Volume (ml) |
| MilliQ water | 974.0 |
| 20x SSC | 25.0 |
| 10% SDS | 1.0 |
| Volume 0.5x SSC, 0.01% SDS | 1000 |

Pass solution through 0.2 µm sterile filtration unit. Store at room temperature.
0.06x SSC:
Add the following components in the order indicated to a nuclease-free graduated cylinder:

**Table 2:**

| ***0.06x SSC*** | |
|---|---|
| Component | Volume (ml) |
| MilliQ water | 997 |
| 20x SSC | 3.0 |
| Volume .06x SSC, | 1000 |

Pass the solution through 0.2 µm sterile filtration unit. Store at room temperature.

### Preparation of "2x Target" Solution:

For each array to be hybridized thaw one tube containing lyophilized mix of
Cy3-cDNA and Cy5-cDNA and store on ice.
Add 7.5 µl nuclease-free water and resuspend cDNA by gentle pipetting.
Add 2.5 µl of 10x Deposition Control Targets.
Add 2.5 µl of 10x Competitor. If no competitor is to be used in the hybridization, add 2.5 µl nuclease-free water.
Mix well by gently pipetting. This solution can be quick frozen on dry ice and stored at -80°C, if desired.

**Table 3:**

| ***Composition of 2x Targets*** | |
|---|---|
| Component | Final Concentration |
| Direct-labeled Cy3 cDNA | <10ng/ul |
| Direct-labeled Cy5 cDNA | <10ng/ul |
| Cy3-HCV0188 Oligonucleotide | 1 nM |
| Cy5-HCV0188 Oligonucleotide | 1 nM |
| Human COT1 DNA | 800 µg/ml |
| Poly dA₄₀₋₆₀ | 400 µg/ml |

### Preparation of Hybridization Solution

Thaw tubes of 2x Targets, if necessary, and store on ice.
Add 12.5 µl of 2x Deposition Hybridization Buffer and mix well by pipetting.
Incubate the hybridization solution at 98°C for 2 minutes in a water bath to denature the cDNA.
Remove from water bath and store on ice for 5 minutes.
Centrifuge briefly at room temperature to collect all material at the bottom of the tube

**Table 4:**

| ***Composition of Hybridization Solution*** | |
|---|---|
| Component | Final Concentration |
| Labeled Cy3 cDNA | <5ng/ul |
| Labeled Cy5 cDNA | <5ng/ul |
| Cy3-HCV0188 Oligonucleotide | 500 pM |
| Cy5-HCV0188 Oligonucleotide | 500 pM |
| Human COT1 DNA | 400 µg/ml |
| Poly dA₄₀₋₆₀ | 200 µg/ml |
| Lithium Lauryl Sulfate | 0.1% |
| LiCl | 358 mM |
| Li-MES pH 6.7 | 200 mM |
| EDTA | 50 µM |
| Total monovalent cation | 500 mM |

### Hybridization

Place each slide to be tested (1x3 slides, 2 arrays per slide (135x120 features each)), active-side up, onto 16K cDNA Array Positioner. The barcode is on the inactive side. The slide should be oriented so that the barcode and the chrome fiducial are in the labeled side of the hybridization chamber base. Avoid touching the array surface.
Blow any dust or debris from the slide surfaces using an air duster.
Pipette 25 µl of Hybridization Target onto center of each array, being careful to avoid addition of air bubbles.
Place an air-dusted coverslip (24mm x 30 mm) over each array, touching one end onto the glass surface and slowly lowering the other to allow the Hybridization target to fill the entire surface beneath the coverslip. Care must be taken to avoid bubble formation.
Place the slide into a hybridization chamber base containing 15 µl of 3X SSC in each humidification reservoir.
Place hybridization chamber cover on top of base and screw tightly closed.
Submerge in a 65°C water bath for approximately 17 hours.

### Washing

Remove hybridization chamber from 65°C water bath and disassemble. Remove slide with coverslip carefully using forceps (note any bubbles or suspicious liquid on the slide).
Remove coverslips by gentle dipping of slide in 0.5x SSC, 0.01% SDS.
Place in glass slide rack submerged in 0.5x SSC, 0.01% SDS in a staining dish at room temperature.
Repeat first two Washing steps for remaining slides.
When all slides are submerged in 0.5x SSC, 0.01% SDS, place staining dish on magnetic stirrer and stir for 5 min at setting 4.
Transfer slides to plastic slide rack in a staining dish filled with 0.06x SSC at room temperature. Stir for 2 min at setting 5.
Quickly transfer plastic racks from 0.06x SSC to centrifuge buckets containing absorbent lint-free wipes on bottom. Centrifuge dry for 2 min at 1200 rpm at room temperature (Juan CT422).
Store slides (that is, the substrate carrying an array) in polypropylene slide boxes in a vacuum dessicator of N₂ purge box, in the dark.

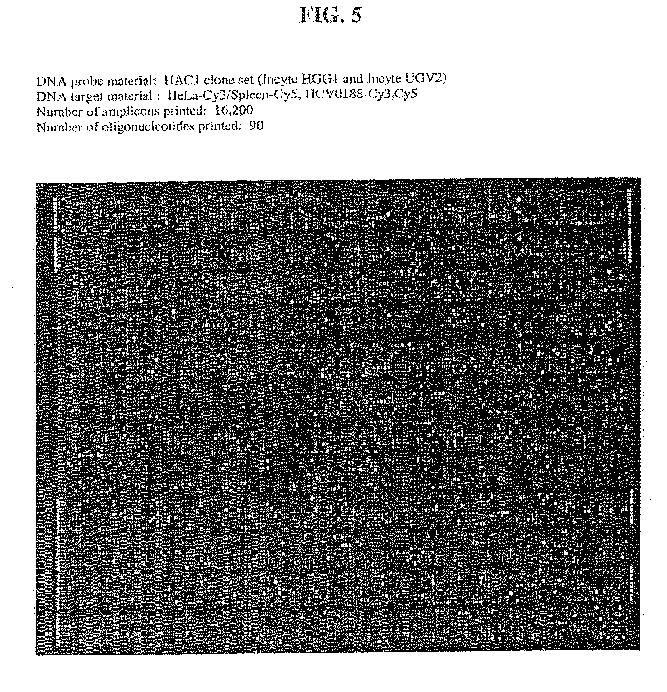

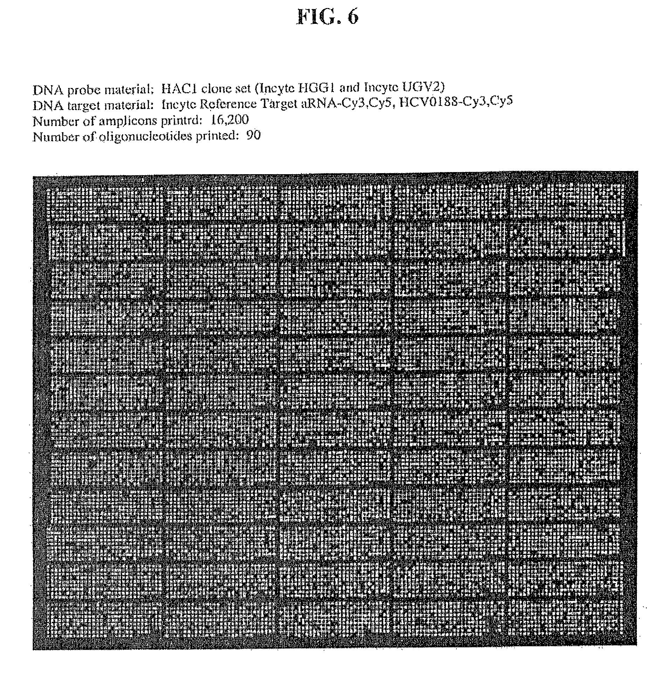

The arrays made and exposed by the foregoing method were scanned, with two different color (red and green) fluorescent scans performed. The resulting data were combined to yield an image in each color from each array representative of the amount of polynucleotides which have bound to first and second set features. The two images from the two color scans are combined for each array, and the results of the combination from each array are illustrated as the gray scale equivalent images in each of FIGS. 5 and 6. The second features (control features) of the arrays are the particularly strong features appearing on either end of some of the lines near the top and bottom of the images. Note that the signal intensity as a result of the control features hybridizing to the control targets, is greater than the signal intensity of any first feature to a sample polynucleotide. As a practical matter, the maximum proportion of first polynucleotides of a first feature hybridized to a sample target polynucleotide, may be no more than 4% (by number) or even no more than 3% or 2%. Similarly, while a greater proportion of second polynucleotides of each second feature may hybridize to a corresponding second polynucleotide to a greater extent than the foregoing extents for the majority (or 70%, 80% or even all) of first features, this proportion may be no more than 10% or 6% (or even no more than 4% or 3%). The locations of the second (control) features as obtained from the an image in one or both colors from an array, may be used to evaluate locations of first features in the image in a manner as described in U.S. patent applications: Serial No. 09/659415 "Method And System For Extracting Data From Surface Array Deposited Features" by Enderwick et al.; and Serial No. 09/435462 "Method Of Extracting Locations Of Surface Array Deposited Features" by Sadler. As mentioned above, these references are incorporated herein by reference.

Modifications in the particular embodiments described above are, of course, possible. For example, where a pattern of arrays is desired, any of a variety of geometries may be constructed other than the organized rows and columns of arrays 12 of FIG. 1. For example, arrays 12 can be arranged in a series of curvilinear rows across the substrate surface (for example, a series of concentric circles or semi-circles of spots), and the like. Similarly, the pattern of regions 16 may be varied from the organized rows and columns of spots in FIG. 2 to include, for example, a series of curvilinear rows across the substrate surface(for example, a series of concentric circles or semi-circles of spots), and the like. Even irregular arrangements of the arrays or the regions within them can be used.

The present methods and apparatus may be used to deposit biopolymers or other moieties on surfaces of any of a variety of different substrates, including both flexible and rigid substrates. Preferred materials provide physical support for the deposited material and endure the conditions of the deposition process and of any subsequent treatment or handling or processing that may be encountered in the use of the particular array. The array substrate may take any of a variety of configurations ranging from simple to complex. Thus, the substrate could have generally planar form, as for example a slide or plate configuration, such as a rectangular or square or disc. In many embodiments, the substrate will be shaped generally as a rectangular solid, having a length in the range about 4 mm to 200 mm, usually about 4 mm to 150 mm, more usually about 4 mm to 75 mm; a width in the range about 4 mm to 200 mm, usually about 4 mm to 120 mm and more usually about 4 mm to 25 mm; and a thickness in the range about 0.01 mm to 5.0 mm, usually from about 0.1 mm to 2 mm and more usually from about 0.2 to 1 mm. However, larger substrates can be used, particularly when such are cut after fabrication into smaller size substrates carrying a smaller total number of arrays 12. Substrates of other configurations and equivalent areas can be chosen. The configuration of the array may be selected according to manufacturing, handling, and use considerations.

The substrates may be fabricated from any of a variety of materials. In certain embodiments, such as for example where production of binding pair arrays for use in research and related applications is desired, the materials from which the substrate may be fabricated should ideally exhibit a low level of non-specific binding during hybridization events. In many situations, it will also be preferable to employ a material that is transparent to visible and/or UV light. For flexible substrates, materials of interest include: nylon, both modified and unmodified, nitrocellulose, polypropylene, and the like, where a nylon membrane, as well as derivatives thereof, may be particularly useful in this embodiment. For rigid substrates, specific materials of interest include: glass; fused silica, silicon, plastics (for example, polytetrafluoroethylene, polypropylene, polystyrene, polycarbonate, and blends thereof, and the like); metals (for example, gold, platinum, and the like).

The substrate surface onto which the polynucleotidc compositions or other moieties are deposited may be porous or non-porous, smooth or substantially planar, or have irregularities, such as depressions or elevations. The surface may be modified with one or more different layers of compounds that serve to modify the properties of the surface in a desirable manner. Such modification layers, when present, will generally range in thickness from a monomolecular thickness to about 1 mm, usually from a monomolecular thickness to about 0.1 mm and more usually from a monomolecular thickness to about 0.001 mm. Modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyethyleneamines, polyarylene sulfides, polysiloxanes, polyimides, polyacetates, and the like, where the polymers may be hetero- or homopolymeric, and may or may not have separate functional moieties attached thereto (for example, conjugated). Such a layer may include a polylysine layer.

Various further modifications to the particular embodiments described above are, of course, possible. Accordingly, the present invention is not limited to the particular embodiments described in detail above.

## Claims

1. A polynucleotide array 12 comprising:
(a) a first set of multiple features 16a each of which feature independently has first polynucleotide molecules of at least 400 nucleotides in length; and
(b) a second set of features 16b each of which feature independently has second polynucleotide molecules of no more than 100 nucleotides in length.

2. A polynucleotide array as claimed in claim 1 wherein the ratio of first set features to second set features is at least 10/1.

3. A polynucleotide array as claimed in claim 1 wherein the ratio of first set features to second set features is at least 20/1.

4. A polynucleotide array as claimed in any preceding claim wherein the first polynucleotide molecules are formed from enzymatic processing of one or more longer polynucleotides, and the second polynucleotide molecules are synthetic.

5. A polynucleotide array as claimed in any preceding claim wherein the first polynucleotide molecules have a length of at least 1000 nucleotides and the second polynucleotides have a length or no more than 80 nucleotides.

6. A polynucleotide array as claimed in any preceding claim wherein the lengths of the first and second polynucleotides exclude the lengths of any polynucleotide stilt portions.

7. A kit comprising:
(a) a polynucleotide array as claimed in any preceding claim and
(b) polynucleotide controls which are, or their complements are, at least 70% complementary to sequences of respective second polynucleotides.

8. A method of fabricating a polynucleotide array comprising:
(a) forming a first set of multiple features on a substrate each of which feature independently has first polynucleotide molecules of at least 400 nucleotides in length; and
(b) forming a second set of features on the substrate each of which feature independently has second polynucleotide molecules of no more than 100 nucleotides in length.

9. A method as claimed in claim 8, additionally comprising the steps of:
(c) enzymatically processing polynucleotides to obtain the first polynucleotide molecules; and
(d) synthesizing the second polynucleotide molecules.

10. A method as claimed in claim 9 additionally comprising evaluating a yield of the enzymatic processing of step (c) for a failed product sequence which has a yield below a predetermined threshold, and synthesizing at least one second polynucleotide of at least 25 nucleotides in length having a sequence the same as a sequence within the failed sequence.

11. A method of using a polynucleotide array as claimed in any of claims 1 to 7, comprising:
exposing the array to control targets such that the control targets hybridize at least 100 times more efficiently to respective second features than they do to any of the first features.

12. A method as claimed in claim 11 wherein the array is additionally simultaneously exposed to a sample.

13. A method as claimed in claim 11 or 12 wherein respective second set features hybridize more efficiently with control targets than any of the first set features hybridize to any control targets.

14. A method as claimed in any of claims 11 to 13 additionally comprising:
reading the array to obtain an image representing the amount of polynucleotides which have bound to first and second set features;
evaluating locations of first features in the image using the locations of second features in the image.
